# EUROPEAN PATENT APPLICATION

(11) **EP 4 703 883 A1**
(43) Date of publication of application: **04.03.2026**
(21) Application number: 25194626.5
(22) Date of filing: 07.08.2025
(51) Int. Cl.: G06F 9/54, H04L 67/133

(54) **METHOD FOR PROCESSING HUMAN-MACHINE-ENVIRONMENT DATA, EDGE COMPUTING DEVICE AND SYSTEM, AND STORAGE MEDIUM**

(30) Priority: 26.08.2024 CN 202411178516
(71) Applicant: Kingfar International Inc., Beijing 100085 (CN)
(72) Inventor: ZHAO, Qichao, Beijing, 100085 (CN); YANG, Ran, Beijing, 100085 (CN)
(74) Representative: Meyer-Dulheuer MD Legal Patentanwälte PartG mbB

(57) **Abstract**

Provided are a method for processing human-machine-environment data, an edge computing device and system and a storage medium. According to the method, the first process writes the first message into the first memory, and reads the second message from the first memory to obtain the message type and the method identifier that are carried in the second message after detecting that the second message is written into the first memory. When the value of the message type carried in the second message is a response, and the method identifier carried in the second message matches the identifier of the method that the first process requests to call, the first process determines that the second message is a response message of the first message, and then processes the second message, thereby realizing efficient and reliable inter-process communication on the same machine, and reducing the communication latency and resource consumption.

## Description

### TECHNICAL FIELD

Embodiments of the present disclosure relates to the field of data processing technologies, and in particular, to a method for processing human-machine-environment data, an edge computing device and system, and a storage medium.

### BACKGROUND

Currently, common remote procedure call (RPC) mechanisms mainly rely on network communication, such as hypertext transfer protocol (HTTP) and/or transmission control protocol (TCP). However, these methods have certain overhead and latency issues in inter-process communication on the same machine.

Network calls inevitably introduce latency, especially in a cross-region or cross-network environment. Such latency can significantly affect response time and performance of the system, resulting in relatively low communication efficiency for RPC calls. Further, the instability of the network environment may lead to problems such as request loss, latency or timeout, so that RPC calls need to handle various network failures, such as network disconnection, packet loss and/or network congestion.

### SUMMARY

Embodiments of the present disclosure provides a method for processing human-machine-environment data, an edge computing device and system, and a storage medium, so as to achieve efficient inter-process communication on the same machine, and reduce the communication latency and resource consumption.

In a first aspect, an embodiment of the present disclosure provides a method for processing human-machine-environment data, including: writing, by a first process, a first message into a first memory, where the first message carries a message type and a method identifier, the method identifier includes an identifier of a method that the first process requests to call, the first memory is a shared memory between the first process and a second process, and the first memory is configured for human-machine-environment data processing between the first process and the second process; reading, by the first process, a second message from the first memory to obtain a message type and a method identifier that are carried in the second message after detecting that the second message is written into the first memory, where the second message is written into the first memory after the second process executes a method indicated by the method identifier carried in the first message, and the second process executes the method indicated by the method identifier carried in the first message after detecting that the first message is written into the first memory, determining that a value of the message type carried in the first message is a request, and confirming that the second process is capable of executing the method indicated by the method identifier carried in the first message; determining, by the first process, that the second message is a response message of the first message when a value of the message type carried in the second message is a response, and the method identifier carried in the second message matches the identifier of the method that the first process requests to call; and processing, by the first process, the second message.

In a possible implementation, the first process includes a process created when a human-machine-environment synchronization platform is started or a process created when a request sent by the human-machine-environment synchronization platform is received, the second process includes a process created when an application center is started, the first message is a permission acquisition request message, a permission is acquired by the human-machine-environment synchronization platform from the application center based on the permission acquisition request message, and the permission includes an application center access permission and/or a human-machine-environment data processing permission. Alternatively, the first process includes a process created when a target application is started, the second process includes a process created when the human-machine-environment synchronization platform is started or a process created when a request sent by the human-machine-environment synchronization platform is received, the method identifier carried in the first message includes a method identifier for instructing the second process to perform human-machine-environment data acquisition control, and the acquisition control includes at least one of: starting acquisition, stopping acquisition, performing filtering or noise reduction preprocessing on acquired data, and extracting specified features from the acquired data.

In a possible implementation, the human-machine-environment data includes human-related data, machine-related data, human-machine interaction-related data, and environment-related data. The human-related data includes one or a combination of: skin electrodermal and temperature data, pulse data, blood pressure data, blood oxygen data, electrocardiogram data, electromyography data, muscle oxygen data, respiratory data, biomechanical data, near-infrared brain imaging data, electroencephalogram data, transcranial stimulation data, heart rate variability data, heart rate data, image/video data, sound data, eye-tracking data, gesture or motion data. The machine-related data includes one or a combination of: machine operation data, fault alarm data, machine manipulation data, machine model data, machine communication data, and machine positioning data. The human-machine interaction-related data includes one or a combination of: human-machine voice-interaction data, human-machine text-interaction data, human-machine touch-interaction data, human-machine gesture or action-interaction data, human-machine electroencephalogram-interaction data, human-machine eye-tracking-interaction data, and human-machine expression-interaction data. The environment-related data includes one or a combination of: location data, humidity data, temperature data, chromaticity data, brightness data, weather data, road condition data, traffic data, stimulus signal data, and event or signal marking data.

In a possible implementation, after said reading, by the first process, the second message from the first memory, the method further includes: obtaining an XOR value of the second message carried in the second message; and before said determining, by the first process, that the second message is the response message of the first message, the method further includes: determining, by the first process, that the XOR value of the second message is correct.

In a possible implementation, after said writing, by the first process, the first message into the first memory, the method further includes: releasing, by the first process, a mutex lock between the first process and the second process; and wherein the detecting, by the second process, that the first message is written into the first memory includes: determining, by the second process, that the first message is written into the first memory when detecting that the mutex lock between the first process and the second process is released.

According to the method for processing human-machine-environment data, the first process writes the first message into the first memory, and reads the second message from the first memory, to obtain the message type and the method identifier that are carried in the second message after detecting that the second message is written into the first memory. When the value of the message type carried in the second message is a response, and the method identifier carried in the second message matches the identifier of the method that the first process requests to call, the first process determines that the second message is a response message of the first message, and then the first process processes the second message, thereby realizing efficient and reliable inter-process communication on the same machine, and reducing the communication latency and resource consumption.

In a possible implementation, before said writing, by the first process, the first message into the first memory, the method further includes: after the first process is started, creating, by the first process, the first memory when the shared memory between the first process and the second process has not been created.

In a possible implementation, after said creating, by the first process, the first memory, the method further includes: creating two buffers in the first memory and designating one of the two buffers as a currently used buffer by the first process.

In a possible implementation, said writing, by the first process, the first message into the first memory includes: determining, by the first process, whether the currently used buffer has available storage space; and writing, by the first process, the first message into the currently used buffer when the currently used buffer has available storage space.

In a possible implementation, after said determining, by the first process, whether the currently used buffer has available storage space, the method further includes: marking the currently used buffer as full and switching to use a standby buffer by the first process when the currently used buffer has no available storage space. The standby buffer is a buffer other than the currently used buffer among the two buffers.

In a possible implementation, said reading, by the first process, the second message from the first memory includes: determining whether the second message exists in the currently used buffer; and when the second message exists in the currently used buffer, reading, by the first process, the second message from the currently used buffer, or when the second message does not exist in the currently used buffer, reading, by the first process, the second message from a standby buffer. The standby buffer is a buffer other than the currently used buffer among the two buffers.

In a possible implementation, after said creating, by the first process, the first memory, the method further includes: creating a buffer array in the first memory, and initializing a read pointer and a write pointer by the first process. Initial positions of the read pointer and the write pointer are a starting position of the buffer array.

In a possible implementation, said writing, by the first process, the first message into the first memory includes: determining, by the first process, a position pointed to by the write pointer; and when a next position of the position pointed to by the write pointer is not the read pointer, writing, by the first process, the first message to the position pointed to by the write pointer.

In a possible implementation, said reading, by the first process, the second message from the first memory includes: determining, by the first process, a position pointed to by the read pointer; and when the position pointed to by the read pointer is different from a position pointed to by the write pointer, reading, by the first process, the second message from the position pointed to by the read pointer.

In a possible implementation, the first message and the second message adopt a same message format, the message format includes a message header and a message body, the message header includes the message type and the method identifier, and the message header further includes an XOR value, a frame identifier, and a message content length of a corresponding message; and/or the second process is a process in which a target program has been running, the first process is a process created upon a current startup of the target program, and the message body of the first message carries a startup parameter of the target program for the current startup.

In a second aspect, an embodiment of the present disclosure provides an edge computing device, including: one or more processors; a memory; a plurality of application programs; and one or more computer programs. The one or more computer programs are stored in the memory, and the one or more computer programs include instructions that, when executed by the edge computing device, cause the edge computing device to execute the method according to the first aspect.

In a possible implementation, the edge computing device further includes: a human-machine-environment data acquisition unit configured to acquire human-machine-environment data; and/or a human-machine-environment data acquisition interface unit configured to be connected to the human-machine-environment data acquisition unit, to acquire the human-machine-environment data.

In a third aspect, an embodiment of the present disclosure provides an edge computing system, including: a human-machine-environment synchronization platform and the edge computing device according to the second aspect. The edge computing device is configured to communicate with a human-machine-environment synchronization platform and send a processing result to the human-machine-environment synchronization platform.

In a fourth aspect, an embodiment of the present disclosure provides a computer-readable storage medium on which a computer program is stored. The computer program, when running on a computer, enable the computer to implement the method according to the first aspect.

In a fifth aspect, an embodiment of the present disclosure provides a computer program, and the computer program, when executed by a computer, is configured to implement the method according to the first aspect.

In one possible design, all or part of the program in the fifth aspect may be stored entirely or partially on a storage medium packaged together with the processor, or may be stored partially or entirely on a memory not packaged together with the processor.

### BRIEF DESCRIPTION OF DRAWINGS

FIG. 1 is a schematic structural diagram of an edge computing device according to an embodiment of the present disclosure;
FIG. 2 is a flowchart of a method for processing human-machine-environment data according to an embodiment of the present disclosure;
FIG. 3 is a schematic diagram of inter-process communication according to an embodiment of the present disclosure;
FIG. 4 is a schematic diagram of a format of a message header according to an embodiment of the present disclosure;
FIG. 5 is a flowchart of a method for processing human-machine-environment data according to another embodiment of the present disclosure;
FIG. 6 is a flowchart of a method for processing human-machine-environment data according to another embodiment of the present disclosure;
FIG. 7 is a schematic structural diagram of an edge computing device according to another embodiment of the present disclosure; and
FIG. 8 is a schematic structural diagram of an edge computing system according to an embodiment of the present disclosure.

### DESCRIPTION OF EMBODIMENTS

Terms used in the embodiments of the present disclosure are merely used to explain specific embodiments of the present disclosure, and are not intended to limit the present disclosure.

Based on the problem that the RPC mechanism in the related art has low efficiency in inter-process communication on the same machine, embodiments of the present disclosure provide a method for processing human-machine-environment data, which can realize efficient and reliable inter-process communication on the same machine, and can also reduce the communication latency and resource consumption.

The method for processing human-machine-environment data provided in the embodiments of the present disclosure can be applied to an edge computing device. The edge computing device can be a device such as a personal computer (PC), a smart phone, a smart watch, a tablet computer, a wearable device, an eye tracker, an electroencephalogram/biomechanical/biological signal acquisition device, an intelligent sensor, a vehicle-mounted device, an augmented reality (AR)/virtual reality (VR) device, a notebook computer, or an ultra-mobile personal computer (UMPC). A specific type of the edge computing device is not limited in the embodiments of the present disclosure.

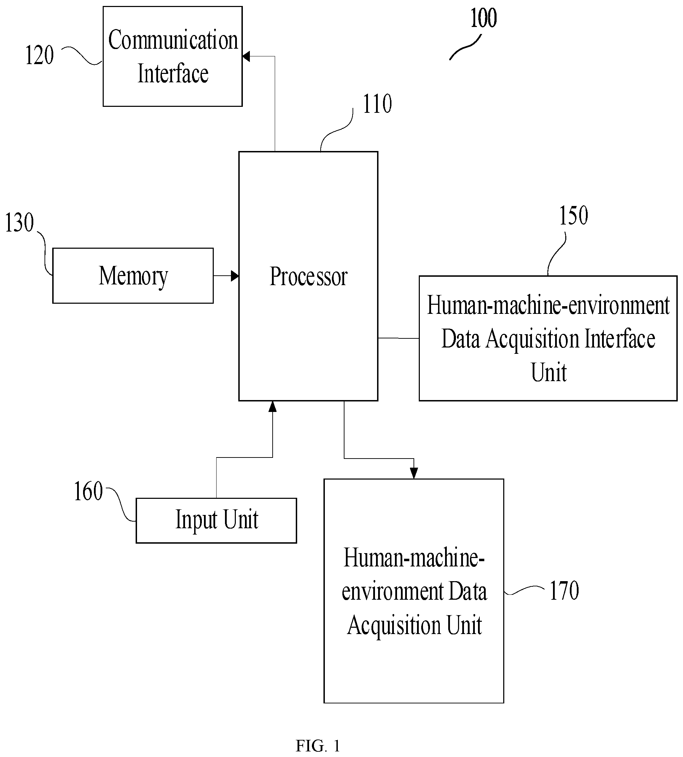

For example, FIG. 1 is a schematic structural diagram of an edge computing device according to an embodiment of the present disclosure. As shown in FIG. 1, the edge computing device 100 can include one or more processors 110, a memory 130, a plurality of application programs, and one or more computer programs. The one or more computer programs are stored in the memory 130, and the one or more computer programs include an instruction that, when executed by the edge computing device 100, is configured to enable the edge computing device 100 to perform the method for processing human-machine-environment data according to the embodiments of the present disclosure.

Further, the edge computing device 100 can further include a communication interface 120. The processor 110, the communication interface 120, and the memory 130 can communicate with each other through an internal connection path, to transmit a control signal and/or a data signal.

The processor 110 and the memory 130 can be combined into a processing apparatus, but more commonly, are independent components. The processor 110 is configured to execute program codes stored in the memory 130. During specific implementation, the memory 130 can also be integrated into the processor 110, or be independent of the processor 110.

Further, to make functions of the edge computing device 100 more complete, the edge computing device 100 can further include one or more of an input unit 160, a human-machine-environment data acquisition interface unit 150, and a human-machine-environment data acquisition unit 170.

The human-machine-environment data acquisition unit 170 is configured to collect the human-machine-environment data; and/or the human-machine-environment data acquisition interface unit 150 is configured to be connected to the human-machine-environment data acquisition unit 170 to acquire the human-machine-environment data.

It should be understood that the processor 110 in the edge computing device 100 shown in FIG. 1 may be a system on chip (SOC), and the processor 110 may include a central processing unit (CPU), or may further include other types of processors, such as a graphics processing unit (GPU), etc.

For ease of understanding, in the following embodiments of the present disclosure, an edge computing device having a structure shown in FIG. 1 is used as an example, and the method for processing human-machine-environment data according to the embodiments of the present disclosure is specifically described with reference to the drawings and application scenarios.

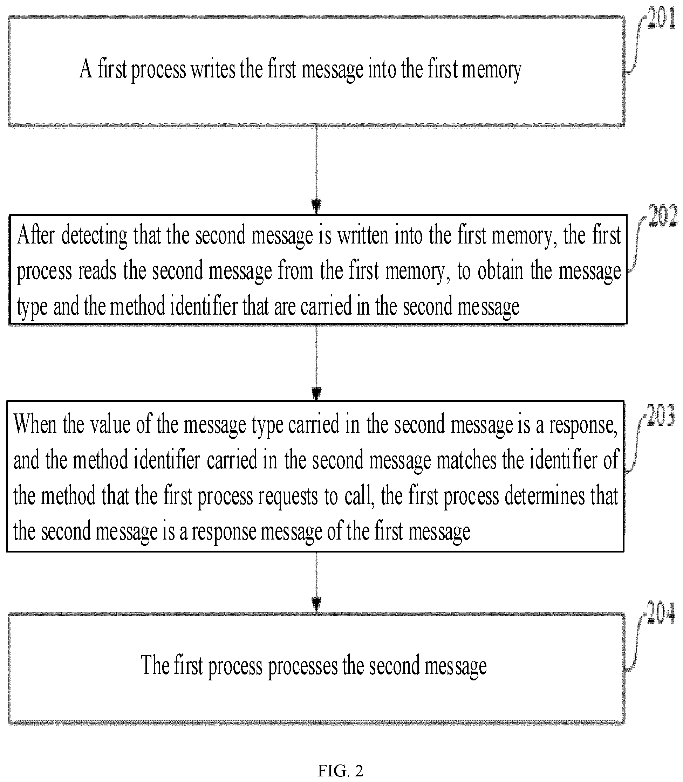

FIG. 2 is a flowchart of a method for processing human-machine-environment data according to an embodiment of the present disclosure. As shown in FIG. 2, the method for processing human-machine-environment data can includes the following steps.

Step 201, a first process writes the first message into the first memory.

The first message carries a message type and a method identifier, and the method identifier includes an identifier of a method that the first process requests to call. The first memory is a shared memory between the first process and a second process, and is configured for human-machine-environment data communication between the first process and the second process.

Step 202, after detecting that the second message is written into the first memory, the first process reads a second message from the first memory, to obtain a message type and a method identifier that are carried in the second message.

The second message is written into the first memory after the second process executes a method indicated by the method identifier carried in the first message. The second process executes the method indicated by the method identifier carried in the first message after detecting that the first message is written into the first memory, determining that a value of the message type carried in the first message is a request, and confirming the second process is capable of executing the method indicated by the method identifier carried in the first message.

It can be seen from this step that both the first process and the second process can access the first memory, that is, the first memory is a shared memory between the first process and the second process, and is configured to store human-machine-environment data between the first process and the second process.

It should be noted that, in an embodiment, the first process and the second process run on a same edge computing device 100, that is, the communication between the first process and the second process occurs on the same edge computing device 100, thereby reducing security risks caused by network communication (for example, data leakage and/or man-in-the-middle attack, etc.).

Step 203, when a value of the message type carried in the second message is a response, and the method identifier carried in the second message matches the identifier of the method that the first process requests to call, the first process determines that the second message is a response message of the first message.

The method identifier carried in the second message matches the identifier of the method that the first process requests to call, including: the method identifier carried in the second message is the same as the identifier of the method that the first process requests to call, or the method identifier carried in the second message corresponds to the identifier of the method that the first process requests to call.

In some examples, after reading the second message from the first memory, the first process may further obtain an XOR value of the second message carried in the second message. In this way, before the first process determines that the second message is a response message of the first message, the first process may further determine that the XOR value of the second message is correct at first. In other words, in these examples, when the value of the message type carried in the second message is a response, the method identifier carried in the second message matches the identifier of the method that the first process requests to call, and the first process determines that the XOR value of the second message is correct, the first process determines that the second message is the response message of the first message.

Step 204, the first process processes the second message.

According to the method for processing human-machine-environment data, the first process writes the first message into the first memory, and reads the second message from the first memory to obtain the message type and the method identifier that are carried in the second message after detecting that the second message is written into the first memory,. when the value of the message type carried in the second message is a response, and the method identifier carried in the second message matches the identifier of the method that the first process requests to call, the first process determines that the second message is a response message of the first message, and then the first process processes the second message, thereby realizing efficient and reliable inter-process communication on the same machine, and reducing the communication latency and resource consumption.

The method for processing human-machine-environment data according to the embodiments shown in FIG. 2 of the present disclosure is described below through a specific example.

In the method for processing human-machine-environment data according to the embodiments of the present disclosure, a shared memory is created between every two processes, which is configured to process the human-machine-environment data between the two processes, and store the human-machine-environment data between the two processes. Further, for the shared memory, a memory pool management technology can be used to dynamically allocate and recycle memory, thereby improving memory utilization.

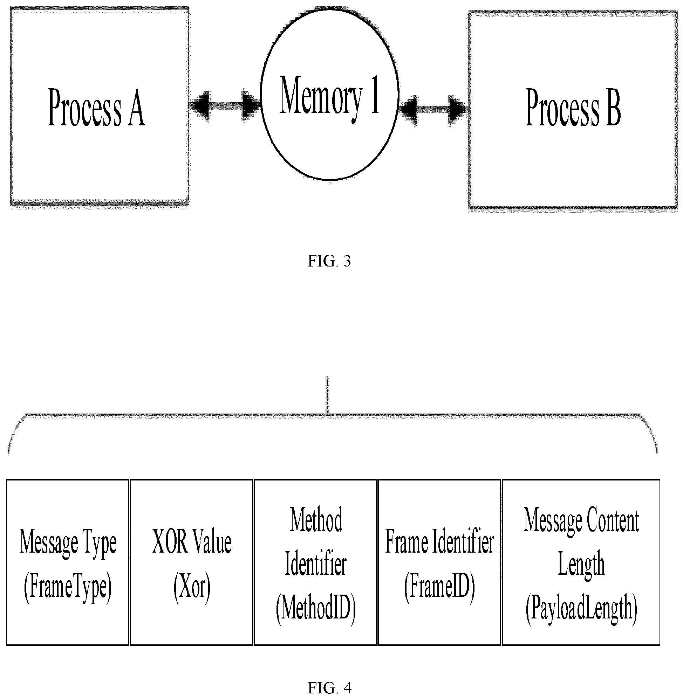

FIG. 3 is a schematic diagram of inter-process communication according to an embodiment of the present disclosure. As shown in FIG. 3, after a process A is started, if the shared memory has not been created between the process A and a process B, the process A can create a memory 1 for communicating with the process B. Here, the process A is equivalent to the first process, the process B is equivalent to the second process, and the memory 1 is equivalent to the first memory. However, if a shared memory has been created between the process A and the process B after the process A is started, the shared memory is the first memory, and the process A does not need to repeatedly create the shared memory.

When the process A needs to call the process B, the process A can write a first message to the memory 1. The first message carries a message type (FrameType) and a method identifier (MethodID), and can further carry an XOR value (Xor), a frame identifier (FrameID), and a message content length (PayloadLength). A value of the message type carried in the first message is a request, the XOR value is an XOR value of the first message, the method identifier is an identifier of a method that the first process A requests to call, and FrameID is a sequence ID for identifying an order of the first message.

After detecting that a message is written in the memory 1, the process B reads the first message from the memory 1. If the value of the message type carried in the first message is a request, the second process is capable of executing the method indicated by the method identifier carried in the first message, and the XOR value of the first message is correct, the process B executes the method indicated by the method identifier carried in the first message. After executing the above-mentioned method, the process B writes the second message into the memory 1. Similarly, the second message carries a message type and a method identifier. Further, the second message can further carry an XOR value, a frame identifier, and a message content length. The value of the message type carried in the second message is a response.

After detecting that a message is written in the memory 1, the process A reads the second message from the memory 1 to obtain the message type and the method identifier that are carried in the second message. When the value of the message type carried in the second message is a response, the method identifier carried in the second message matches the identifier of the method that the first process A requests to call, and the XOR value of the second message is correct, the process A determines that the second message is a response message of the first message. Then, the process A can process the second message.

The above description is described by taking the process A calling the process B as an example, and a procedure of the process B calling the process A is similar, which will not be repeated herein.

It can be seen from the descriptions of the above embodiments that the first message and the second message adopt a same message format, and the message format includes a message header and a message body. FIG. 4 is a schematic diagram of a format of a message header according to an embodiment of the present disclosure. As shown in FIG. 4, the message header includes a message type and a method identifier. The message header can also include an XOR value of the message, a frame identifier, and a message content length.

The value of the message type may be a request or a response.

The XOR value is an XOR value of the entire message.

The method identifier is an identifier of a method.

The frame identifier is a sequence identifier for identifying an order of messages, and a value of the frame identifier is incremented in the form of an atomic operation.

In the embodiment shown in FIG. 2, a first memory is created between the first process and the second process for RPC communication between the first process and the second process. During specific implementation, a mutex lock mechanism can be used to implement inter-process synchronization, to ensure the security of concurrent access to the shared memory. In an example, in the embodiment shown in FIG. 2 of the present disclosure, after step 201, the first process may further release a mutex lock between the first process and the second process. In this way, the second process can detect that the first message is written into the first memory as follows: the second process determines that the first message is written into the first memory after detecting that the mutex lock between the first process and the second process is released.

Similarly, in step 202, after the second process writes the second message into the first memory, the mutex lock between the first process and the second process is released. In this way, the first process can determine that the second message is written into the first memory after detecting that the mutex lock between the first process and the second process is released.

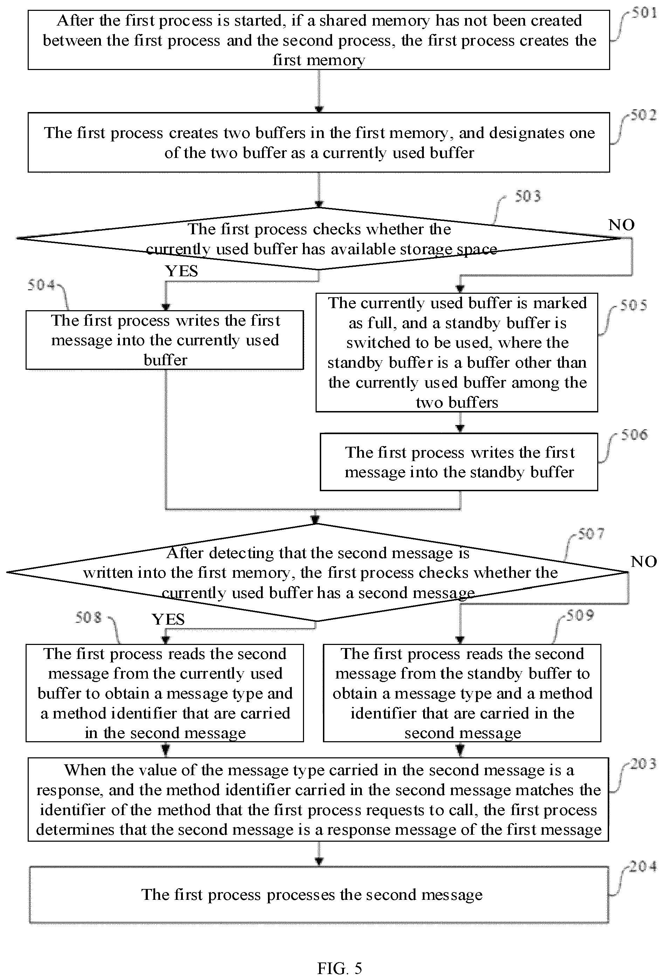

FIG. 5 is a flowchart of a method for processing human-machine-environment data according to another embodiment of the present disclosure. As shown in FIG. 5, in the embodiment shown in FIG. 2 of the present disclosure, before step 201, the method may further include the following steps.

Step 501, after the first process is started, if a shared memory has not been created between the first process and the second process, the first process creates the first memory.

It should be noted that if a shared memory has been created between the first process and the second process after the first process is started, the first process does not need to repeatedly create the shared memory, and the created shared memory is the first memory.

Step 502, the first process creates two buffers in the first memory, and designates one of the two buffer as a currently used buffer.

In this way, step 201 may include the following steps.

Step 503, the first process checks whether the currently used buffer has available storage space. If the currently used buffer has available storage space, step 504 is performed; and if the currently used buffer has no available storage space, step 505 to step 506 are performed.

Step 504, the first process writes the first message into the currently used buffer. Then, step 507 is performed.

Step 505, the currently used buffer is marked as full, and a standby buffer is switched to be used. The standby buffer is a buffer other than the currently used buffer among the two buffers.

Step 506, the first process writes the first message into the standby buffer. Then, step 507 is performed.

Step 202 may include the following steps.

Step 507, after detecting that the second message is written into the first memory, the first process checks whether the second message exists in the currently used buffer. If yes, step 508 is performed; and if the second message does not exist in the currently used buffer, step 509 is performed.

Step 508, the first process reads the second message from the currently used buffer, to obtain a message type and a method identifier that are carried in the second message. Then, step 203 is performed.

Step 509, the first process reads the second message from the standby buffer, to obtain a message type and a method identifier that are carried in the second message. Then, step 203 is performed.

In an embodiment, two buffers are used to alternately perform data read and write operations, which can improve data processing efficiency and system response speed. Further, while data is being written to one buffer, data can be read from another buffer. The read and write operations are alternately performed, which can ensure continuity and efficiency of data processing.

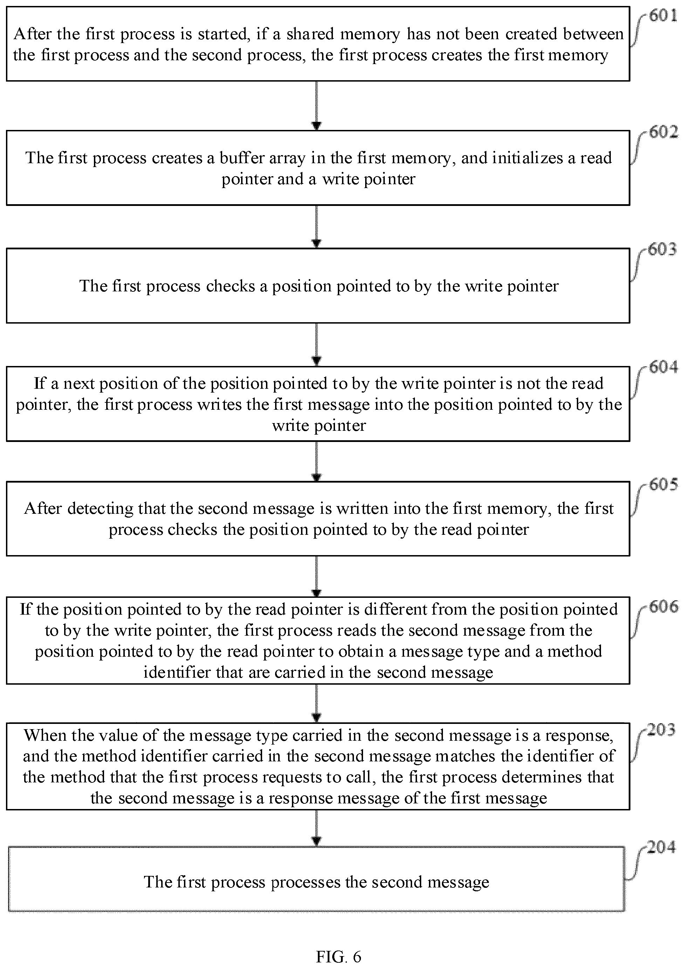

FIG. 6 is a flowchart of a method for processing human-machine-environment data according to another embodiment of the present disclosure. As shown in FIG. 6, in the embodiment shown in FIG. 2 of the present disclosure, before step 201, the method may further include the following steps.

Step 601, after the first process is started, if a shared memory has not been created between the first process and the second process, the first process creates the first memory.

It should be noted that if a shared memory has been created between the first process and the second process after the first process is started, the first process does not need to repeatedly create the shared memory, and the created shared memory is the first memory.

Step 602, the first process creates a buffer array in the first memory, and initializes a read pointer and a write pointer.

Initial positions of the read pointer and the write pointer are a starting position of the buffer array. This is equivalent to creating a circular buffer in the first memory. The circular buffer is a first input first output (FIFO) data structure. The head and tail of the buffer are connected to form a ring structure, which is suitable for continuous data stream processing.

In this way, step 201 may include the following steps.

Step 603, the first process checks a position pointed to by the write pointer.

Step 604, if a next position of the position pointed to by the write pointer is not the read pointer, the first process writes the first message into the position pointed to by the write pointer.

In an example, if the next position of the position pointed to by the write pointer is the read pointer, it indicates that the buffer is full and needs to wait or discard data. Further, after the first process writes the first message to the position pointed to by the write pointer, the write pointer needs to be moved to the next position. After each write operation, the write pointer needs to be moved to the next position until the write pointer loops back to the starting position of the buffer array.

Step 202 may include the following steps.

Step 605, after detecting that the second message is written into the first memory, the first process checks the position pointed to by the read pointer.

Step 606, if the position pointed to by the read pointer is different from the position pointed to by the write pointer, the first process reads the second message from the position pointed to by the read pointer, to obtain the message type and the method identifier that are carried in the second message. Then, step 203 is performed.

In an example, if the position pointed to by the read pointer is the same as the position pointed to by the write pointer, it indicates that the buffer is empty and needs to wait or perform another operation.

Further, after the first process reads the second message from the position pointed to by the read pointer, the read pointer needs to be moved to the next position. After each read operation, the read pointer needs to be moved to the next position until the read pointer loops back to the starting position of the buffer array.

In an embodiment, the circular buffer is configured to optimize read and write operations and reduce blocking. Since the head and tail of the circular buffer are connected, the management of the write pointer and the read pointer needs to pay attention to a boundary condition, and a modular operation (mod) can be used to process the circulation of the pointers.

According to the method for processing human-machine-environment data according to the embodiment of the present disclosure, inter-process communication is realized by means of the shared memory. Since data is directly read from and written into the shared memory, the communication latency is very low, which is suitable for application scenarios with extremely high requirements on response time. Further, data transmission is completed in the memory and does not need to go through the network, thereby avoiding the overhead of network communication (such as TCP/IP protocol stack processing), and reducing the use of system resources such as CPU and memory consumption. Additionally, the shared memory provides extremely high bandwidth, which can transmit large-scale data without being limited by bandwidth as network transmission.

Further, in the method for processing human-machine-environment data according to the embodiments of the present disclosure, the human-machine-environment data communication occurs on the same machine, thereby reducing security risks caused by network communication, such as data leakage and man-in-the-middle attacks, and requiring only managing inter-process access control and permissions in the local system. In addition, an embodiment of the present disclosure provides an error detection mechanism, which can detect data transmission errors through a frame identifier (FrameID). For example, assuming that the frame identifier of the first message is 1, the frame identifier of the second message should be 2. In this way, if the frame identifier of the second message read by the first process from the first memory is 3, a data transmission error can be determined. After detecting the data transmission error, an embodiment of the present disclosure further provides an error recovery mechanism, including retry, rollback, and/or logging, so as to ensure the reliability of communication.

In the method for processing human-machine-environment data according to the embodiments of the present disclosure, the human-machine-environment data communication occurs on the same machine and belongs to local communication, so that a developer does not need to deal with the complexity of network communication, such as connection management, packet processing and/or network protocols, thereby simplifying coding and debugging work. Further, an embodiment of the present disclosure provides a concise application programming interface (API) for users to conveniently call RPC functions.

The following describes the application scenarios of the method for processing human-machine-environment data according to the embodiments of the present disclosure.

Scenario 1: the method for processing human-machine-environment data according to the embodiments of the present disclosure can be applied to a singleton mode startup scenario of the target program. The singleton mode means that the target program can only run once. If it is found that the target program is already running after the target program is started, the process created upon the current startup of the target program can use the method according to the embodiments shown in FIG. 2 to FIG. 6 of the present disclosure to send a startup parameter to the process in which the target program has been running, and then exit by itself.

In this scenario, a process in which the target program has been running can be considered as a second process, the process created upon the current startup of the target program can be considered as a first process, and a message body of the first message carries the startup parameter of the target program for the current startup.

Scenario 2: the method for processing human-machine-environment data according to the embodiments of the present disclosure can be applied to a permission control scenario of an application center (App Center). For example, the human-machine-environment synchronization platform can obtain the permission from the application center using the method according to the embodiments shown in FIG. 2 to FIG. 6 of the present disclosure.

In this scenario, the first process can be a process created when the human-machine-environment synchronization platform is started or a process created when a request sent by the human-machine-environment synchronization platform is received, and the second process can be a process created when the application center is started. The first message is a permission acquisition request message, and the human-machine-environment synchronization platform acquires the permission from the application center using the permission acquisition request message. The permission can include an application center access permission and/or a human-machine-environment data processing permission. The procedure in which the human-machine-environment synchronization platform obtains the permission from the application center can be referred to the description of the embodiments shown in FIG. 2 to FIG. 6, which will not be repeated herein.

Scenario 3: the method for processing human-machine-environment data according to the embodiments of the present disclosure can be applied to a scenario in which a target application (for example, a questionnaire scale) requests a human-machine-environment synchronization platform to collect and/or process human-machine-environment data.

In this scenario, the first process can be a process created when a target application (for example, a questionnaire table) is started, and the second process can be a process created when the human-machine-environment synchronization platform is started or a process created when the request sent by the human-machine-environment synchronization platform is received. The method identifier carried in the first message can include a method identifier for instructing the second process to perform human-machine-environment data acquisition control, and the acquisition control can include at least one of: starting acquisition, stopping acquisition, performing filtering or noise reduction preprocessing on acquired data, and extracting specified features from the acquired data.

The human-machine-environment data mentioned in an embodiment of the present disclosure may include human-related data, machine-related data, human-machine interaction-related data, and environment-related data.

The human-related data includes one or a combination of the following: skin electrodermal and temperature data, pulse data, blood pressure data, blood oxygen data, electrocardiogram data, electromyography data, muscle oxygen data, respiratory data, biomechanical data, near-infrared brain imaging data, electroencephalogram data, transcranial stimulation data, heart rate variability data, heart rate data, image/video data, sound data, eye-tracking data, gesture or motion data.

The machine-related data includes one or a combination of: machine operation data, fault alarm data, machine manipulation data, machine model data, machine communication data, and machine positioning data.

The human-machine interaction-related data includes one or a combination of: human-machine voice-interaction data, human-machine text-interaction data, human-machine touch-interaction data, human-machine gesture or action-interaction data, human-machine electroencephalogram-interaction data, human-machine eye-tracking-interaction data, and human-machine expression-interaction data.

The environment-related data includes one or a combination of: location data, humidity data, temperature data, chromaticity data, brightness data, weather data, road condition data, traffic data, stimulus signal data, and event or signal marking data.

The above data are incomplete enumerations of various data that need to be obtained for human factors and ergonomics analysis. The above-mentioned human-machine-environment data can further include other data, and the embodiments of the present disclosure do not limit the above-mentioned human-machine-environment data.

It can be understood that some or all of the steps or operations in the above embodiments are merely examples, and the embodiments of the present disclosure can also perform other operations or variations of various operations. Further, each step may be executed in a different order from that presented in the above embodiments, and it may not be necessary to execute all operations in the above embodiments.

It can be understood that, to implement the above-mentioned functions, the edge computing device includes corresponding hardware and/or software modules for executing each function. With reference to algorithm steps of each example described in the embodiments disclosed in the present disclosure, the present disclosure can be implemented in a form of hardware or a combination of hardware and computer software. Whether a function is executed by hardware or by computer software driving hardware depends on the specific application and design constraints of the technical solution. Those skilled in the art may use different methods to implement the described functions for each specific application in conjunction with the embodiments, but such implementation should not be considered beyond a scope of the present disclosure.

In an embodiment, functional modules of the edge computing device can be divided according to the above-mentioned method embodiments. For example, each functional module can be divided corresponding to each function, or two or more functions can be integrated into one module. The above-mentioned integrated module can be implemented in a form of hardware. It should be noted that the division of modules in the embodiments of present disclosure is exemplary, and is merely a logical function division. There may be other division manners in actual implementation.

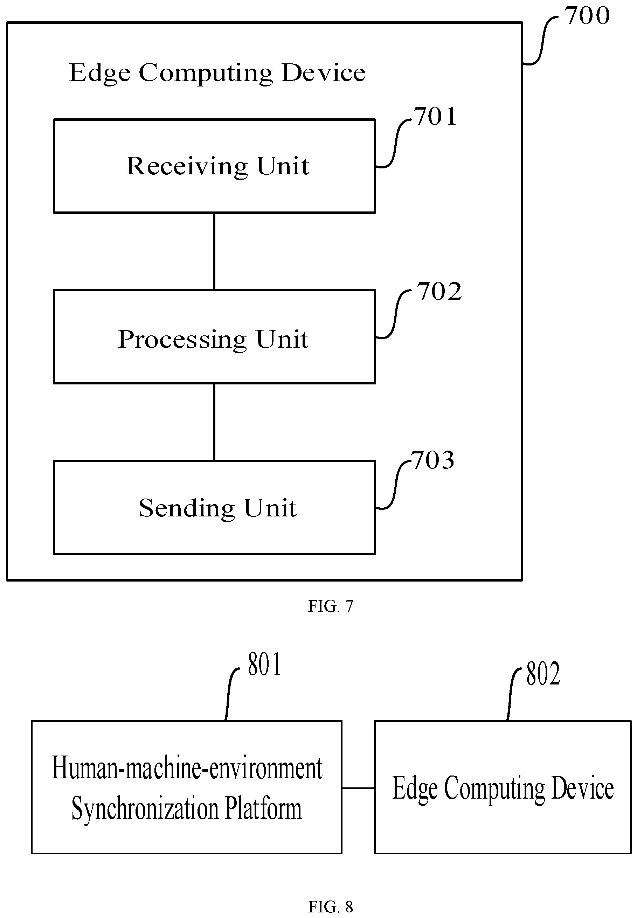

FIG. 7 is a schematic structural diagram of an edge computing device according to another embodiment of the present disclosure. In the case where each functional module is divided according to each function, FIG. 7 shows a possible composition diagram of the edge computing device 700 involved in the above embodiments. As shown in FIG. 7, the edge computing device 700 can include: a receiving unit 701, a processing unit 702, and a sending unit 703.

The processing unit 702 can be configured to support the edge computing device 700 in executing step 201 to step 204, step 501 to step 509, and step 601 to step 606, and/or can be used for another process of the technical solution described in the embodiments of the present disclosure.

All relevant contents of each step involved in the method embodiment shown in FIG. 2 to FIG. 6 in the present disclosure can be referred to in the functional description of a corresponding function module, which will not be repeated herein.

The edge computing device 700 according to the embodiments of the present disclosure is configured to execute the method for processing human-machine-environment data according to the embodiments shown in FIG. 2 to FIG. 6 in the present disclosure, so that the same effects as the above-mentioned methods can be achieved.

It should be understood that the edge computing device 700 may correspond to the edge computing device 100 shown in FIG. 1. Functions of the receiving unit 701 and the sending unit 703 can be implemented by the processor 110 and the communication interface 120 in the edge computing device 100 shown in FIG. 1. Functions of the processing unit 702 can be implemented by the processor 110 in the edge computing device 100 shown in FIG. 1.

When using an integrated unit, the edge computing device 700 may include a processing module, a storage module, and a communication module.

The processing module can be configured to control and manage an action of the edge computing device 700, for example, can be configured to support the edge computing device 700 in executing the steps executed by the receiving unit 701, the processing unit 702, and the sending unit 703. The storage module can be configured to support the edge computing device 700 in storing program codes, data, and the like. The communication module can be configured to support communication between the edge computing device 700 and other devices.

The processing module may be a processor or a controller, which can implement or execute various exemplary logical blocks, modules, and circuits described in connection with the present disclosure. The processor may also be a combination that implements a computing function, for example, a combination of one or more microprocessors, or a combination of a digital signal processing (DSP) and a microprocessor. The storage module may be a memory. The communication module may specifically be a device that interacts with other edge computing devices, such as a radio frequency circuit, a Bluetooth chip, and/or a Wi-Fi chip.

In an embodiment, when the processing module is a processor and the storage module is a memory, the edge computing device 700 in the embodiments of the present disclosure may be a device having a structure shown in FIG. 1.

FIG. 8 is a schematic structural diagram of an edge computing system according to an embodiment of the present disclosure. As shown in FIG. 8, the edge computing system can include: a human-machine-environment synchronization platform 801 and an edge computing device 802.

The edge computing device 802 communicates with the human-machine-environment synchronization platform 801 and sends a processing result to the human-machine-environment synchronization platform 801. The processing result can be a processing result of the edge computing device 802 for human-machine-environment data.

In an embodiment, the edge computing device 802 may be a device having a structure shown in FIG. 1 or FIG. 7.

An embodiment of the present disclosure further provides a computer-readable storage medium on which a computer program is stored. The computer program, when running on a computer, is configured to enable the compute to implement the method provided in the embodiments shown in FIG. 2 to FIG. 6 of the present disclosure.

An embodiment of the present disclosure further provides a computer program product, which includes a computer program. The computer program, when running on a computer, is configured to enable the computer to implement the method provided in the embodiment shown in FIG. 2 to FIG. 6 in the present disclosure.

In the embodiments of the present disclosure, "at least one" refers to one or more, and "a plurality of" refers to two or more. It should be understood that the term "and/or" describes an associated relationship of an associated object, indicating that there may be three relationships, for example, A and/or B, and may indicate: only A, both A and B, and only B. A and B may be singular or plural. The character "/' herein generally indicates an "or" relationship between the associated objects. "At least one of the following" and similar expressions thereof refer to any combination of these items, including any combination of a single item or plural items. For example, at least one of a, b, and c may represent: a, b, c, a combination of a and b, a combination of a and c, a combination of b and c, and a combination of a, b and c, where a, b, and c may be single or multiple.

Those skilled in the art may understand that each unit and each algorithm step described in the embodiments disclosed herein can be implemented using electronic hardware, and a combination of electronic hardware and computer software. Whether these functions are executed in hardware or software depends on the specific application and design constraints of the technical solution. Those skilled in the art may use different methods to implement the described functions for each specific application, but such implementation should not be considered to be beyond the scope of the present disclosure.

Those skilled in the art should clearly understand that, for convenience and conciseness of description, the specific operating processes of the above-described system, device and unit can refer to the corresponding process in the above method embodiments, which will not be repeated herein.

In some embodiments provided in the present disclosure, if any function is implemented in a form of a software function unit and is sold or used as an independent product, the function may be stored in a computer-readable storage medium. Based on such understanding, the technical solution of the present disclosure can essentially be embodied in the form of a software product, or the part that contributes to the prior art or a part of the technical solution can be embodied in the form of a software product. The computer software product is stored in the storage medium and includes a number of instructions for enabling a computer device, which may be a personal computer, a server, or a network device, etc., to execute all or some of the steps of the method described in each embodiment of the present disclosure. The aforementioned storage medium includes: U disk, mobile hard disk, read-only memory (ROM), random access memory (RAM), magnetic disk or optical disk and other media that can store program codes.

The above descriptions are merely specific implementations of the present disclosure. Any person skilled in the art can easily think of changes or substitutions within the technical scope disclosed in the present disclosure, and they should be covered within the protection scope of the present disclosure. The protection scope of the present disclosure should be based on the protection scope of the claims.

## Claims

1. A method for processing human-machine-environment data, comprising:
writing, by a first process, a first message into a first memory, wherein the first message carries a message type and a method identifier, the method identifier comprises an identifier of a method that the first process requests to call, the first memory is a shared memory between the first process and a second process, and the first memory is configured for human-machine-environment data processing between the first process and the second process;
reading, by the first process, a second message from the first memory to obtain a message type and a method identifier that are carried in the second message after detecting that the second message is written into the first memory, wherein the second message is written into the first memory after the second process executes a method indicated by the method identifier carried in the first message, and the second process executes the method indicated by the method identifier carried in the first message after detecting that the first message is written into the first memory, determining that a value of the message type carried in the first message is a request, and confirming that the second process is capable of executing the method indicated by the method identifier carried in the first message;
determining, by the first process, that the second message is a response message of the first message when a value of the message type carried in the second message is a response, and the method identifier carried in the second message matches the identifier of the method that the first process requests to call; and
processing, by the first process, the second message.

2. The method according to claim 1, wherein the first process comprises a process created when a human-machine-environment synchronization platform is started or a process created when a request sent by the human-machine-environment synchronization platform is received, the second process comprises a process created when an application center is started, the first message is a permission acquisition request message, a permission is acquired by the human-machine-environment synchronization platform from the application center based on the permission acquisition request message, and the permission comprises an application center access permission and/or a human-machine-environment data processing permission; or
the first process comprises a process created when a target application is started, the second process comprises a process created when the human-machine-environment synchronization platform is started or a process created when a request sent by the human-machine-environment synchronization platform is received, the method identifier carried in the first message comprises a method identifier for instructing the second process to perform human-machine-environment data acquisition control, and the acquisition control comprises at least one of: starting acquisition, stopping acquisition, performing filtering or noise reduction preprocessing on acquired data, and extracting specified features from the acquired data.

3. The method according to claim 1, wherein the human-machine-environment data comprises human-related data, machine-related data, human-machine interaction-related data, and environment-related data;
the human-related data comprises one or a combination of: skin electrodermal and temperature data, pulse data, blood pressure data, blood oxygen data, electrocardiogram data, electromyography data, muscle oxygen data, respiratory data, biomechanical data, near-infrared brain imaging data, electroencephalogram data, transcranial stimulation data, heart rate variability data, heart rate data, image/video data, sound data, eye-tracking data, gesture or motion data;
the machine-related data comprises one or a combination of: machine operation data, fault alarm data, machine manipulation data, machine model data, machine communication data, and machine positioning data;
the human-machine interaction-related data comprises one or a combination of: human-machine voice-interaction data, human-machine text-interaction data, human-machine touch-interaction data, human-machine gesture or action-interaction data, human-machine electroencephalogram-interaction data, human-machine eye-tracking-interaction data, and human-machine expression-interaction data; and
the environment-related data comprises one or a combination of: location data, humidity data, temperature data, chromaticity data, brightness data, weather data, road condition data, traffic data, stimulus signal data, and event or signal marking data.

4. The method according to claim 1, wherein after said reading, by the first process, the second message from the first memory, the method further comprises:
obtaining an exclusive-or (XOR) value of the second message carried in the second message; and
wherein before said determining, by the first process, that the second message is the response message of the first message, the method further comprises:
determining, by the first process, that the XOR value of the second message is correct.

5. The method according to claim 1, wherein after said writing, by the first process, the first message into the first memory, the method further comprises:
releasing, by the first process, a mutex lock between the first process and the second process; and
wherein the detecting, by the second process, that the first message is written into the first memory comprises:
determining, by the second process, that the first message is written into the first memory when detecting that the mutex lock between the first process and the second process is released.

6. The method according to any one of claims 1 to 5, wherein before said writing, by the first process, the first message into the first memory, the method further comprises:
after the first process is started, creating, by the first process, the first memory when the shared memory between the first process and the second process has not been created.

7. The method according to claim 6, wherein after said creating, by the first process, the first memory, the method further comprises:
creating two buffers in the first memory and designating one of the two buffers as a currently used buffer by the first process.

8. The method according to claim 7, wherein said writing, by the first process, the first message into the first memory comprises:
determining, by the first process, whether the currently used buffer has available storage space; and
writing, by the first process, the first message into the currently used buffer when the currently used buffer has available storage space, or
marking the currently used buffer as full and switching to use a standby buffer by the first process when the currently used buffer has no available storage space, wherein the standby buffer is a buffer other than the currently used buffer among the two buffers.

9. The method according to claim 7, wherein said reading, by the first process, the second message from the first memory comprises:
determining, by the first process, whether the second message exists in the currently used buffer; and
reading, by the first process, the second message from the currently used buffer when the second message exists in the currently used buffer, or
reading, by the first process, the second message from a standby buffer when the second message does not exist in the currently used buffer, wherein the standby buffer is a buffer other than the currently used buffer among the two buffers.

10. The method according to claim 6, wherein after said creating, by the first process, the first memory, the method further comprises:
creating a buffer array in the first memory and initializing a read pointer and a write pointer by the first process, wherein initial positions of the read pointer and the write pointer are a starting position of the buffer array.

11. The method according to claim 10, wherein said writing, by the first process, the first message into the first memory comprises:
determining, by the first process, a position pointed to by the write pointer; and
writing, by the first process, the first message to the position pointed to by the write pointer when a next position of the position pointed to by the write pointer is not the read pointer.

12. The method according to claim 10, wherein said reading, by the first process, the second message from the first memory comprises:
determining, by the first process, a position pointed to by the read pointer; and
reading, by the first process, the second message from the position pointed to by the read pointer when the position pointed to by the read pointer is different from a position pointed to by the write pointer.

13. The method according to any one of claims 1 to 5, wherein the first message and the second message adopt a same message format, the message format comprises a message header and a message body, the message header comprises the message type and the method identifier, and the message header further comprises an XOR value, a frame identifier, and a message content length of a corresponding message; and/or
the second process is a process in which a target program has been running, the first process is a process created upon a current startup of the target program, and the message body of the first message carries a startup parameter of the target program for the current startup.

14. An edge computing device, comprising:
one or more processors;
a memory;
a plurality of application programs; and
one or more computer programs, wherein the one or more computer programs are stored in the memory, and the one or more computer programs comprise instructions that, when executed by the edge computing device, cause the edge computing device to execute the method according to any one of claims 1 to 13.

15. The edge computing device according to claim 14, further comprising:
a human-machine-environment data acquisition unit configured to acquire human-machine-environment data; and/or
a human-machine-environment data acquisition interface unit configured to be connected to the human-machine-environment data acquisition unit to acquire the human-machine-environment data.
